# EUROPEAN PATENT SPECIFICATION

(11) **EP 1 587 163 B1**
(45) Date of publication and mention of the grant of the patent: **05.11.2008**
(21) Application number: 05102033.7
(22) Date of filing: 15.03.2005
(51) Int. Cl.: H01Q 13/10, H01Q 1/38

(54) **A slot type antenna on a substrate with an ondulated surface profile**
Schlitzantenne auf einem Substrat mit wellenförmigem Oberflächenprofil
Antenne de type fente sur un substrat à surface de profile ondulé

(30) Priority: 06.04.2004 FR 0450693
(43) Date of publication of application: 19.10.2005
(73) Proprietor: Thomson Licensing, 92100 Boulogne-Billancourt (FR)
(72) Inventor: Louzir, Ali, 35000 Rennes (FR); Minard, Philippe, 35250 Saint Medard sur Ille (FR); Pintos, Jean-Francois, 35230 Bourgbarre (FR)
(74) Representative: Ruellan-Lemonnier, Brigitte

(56) References cited:
- FR-A- 2 701 614
- US-A1- 2004 008 146
- US-B1- 6 259 407
- US-B1- 6 337 662
- US-B2- 6 483 462
- PATENT ABSTRACTS OF JAPAN vol. 2000, no. 01, 31 January 2000 (2000-01-31) -& JP 11 284431 A (SUMITOMO METAL IND LTD), 15 October 1999 (1999-10-15)

## Description

The present invention relates to a planar antenna, more particularly a slot type planar antenna presented in a compact form so as to be able to be integrated, for example, into terminals for wireless networks.

The devices used in wireless networks are increasingly lightweight and small so as to respond to the requirements of users. Hence, the antennas designed for such terminals must have a reduced size while offering high performances.

However, although significant miniaturization is observed in the field of electronics, the laws of physics impose a minimum size for an antenna in order for it to function correctly in a given frequency band. Hence, for printed antennas, the dimensions are generally in the order of the wavelength at the central operating frequency.

Several techniques have been proposed for reducing the size of the antennas while retaining their radio-electric performances relating to yield, frequency bandwidth and radiation pattern.

Hence, in the French patent application FR2826512 in the name of THOMSON Licensing S.A., a description is made of an annular slot type planar antenna in which the slot has been shaped to extend the perimeter of this slot. This enables either the substrate dimensions to be reduced for a given frequency, or, at constant dimensions, to modify the operating frequency.

Knowing that the resonant frequency of a slot type antenna depends on the slot length, the present invention proposes a new technique for reducing the size of a slot type planar antenna that is independent from the shape of this slot.

Hence, the present invention relates to a planar antenna comprising a substrate with a ground plane on a first face of the substrate, a slot etched in said ground plane and a feed line realized on a second face of the substrate opposite said first face, said feed line crosses the slot for electromagnetic coupling. Said second face of the substrate is planar while said first face of the substrate has along the slot a variable profile, such that the thickness of the substrate between said first and said second face is variable along the slot in alternating way.

According to a first embodiment, the profile of the substrate face on which the slot is realised is a continuous profile, for example a sinusoidal profile.

According to another embodiment, the profile of the substrate face on which the slot is realised is a discontinuous profile, for example a crenelate profile, the crenelations can be square, rectangular, trapezoidal or presenting any other polygonal shape.

According to another characteristic of the present invention, the profile of the face of the substrate on which the slot is realized is a periodic or aperiodic profile. Hence, the period of the continuous or discontinuous profiles is constant or variable. For example, a substrate profile can present a low period on a first part of the length, then a longer period on another part of the length.

According to yet another embodiment, the profile of the substrate face on which the slot is realised is a radial symmetry profile. In this case, the slot can be an annular slot or a resonating slot-line.

The radial symmetry profile can also be associated with a continuous or discontinuous profile, as mentioned above.

Other characteristics and advantages of the present invention will emerge upon reading the description of different embodiments, this description being made with reference to the drawings attached in the appendix, in which:
Figure 1 is a diagrammatic perspective view of a linear slot type planar antenna, according to prior art.
Figure 2 is a diagrammatic perspective view of a linear slot type planar antenna, according to a first embodiment of the present invention.
Figure 3 is a diagrammatic perspective view of a linear slot type planar antenna, according to prior art.
Figure 4 shows respectively in bottom view (A) and top view (B) perspective, a linear slot type planar antenna, according to another embodiment of the present invention, this antenna being obtained by starting from the antenna shown in figure 3.
Figure 5 shows the curves giving the adaptation S11 as a function of the frequency for the antenna shown in figure 3 and for the antenna shown in figure 4.
Figure 6a shows the radiation pattern of the antenna of figure 4 and, Figure 6b shows the radiation pattern of the antenna of figure 3.
Figure 7 and Figure 8 are respectively diagrammatic perspective views of other embodiments of the substrate for a planar antenna in accordance with the present invention, respectively for an annular slot type antenna and for a linear slot type antenna.

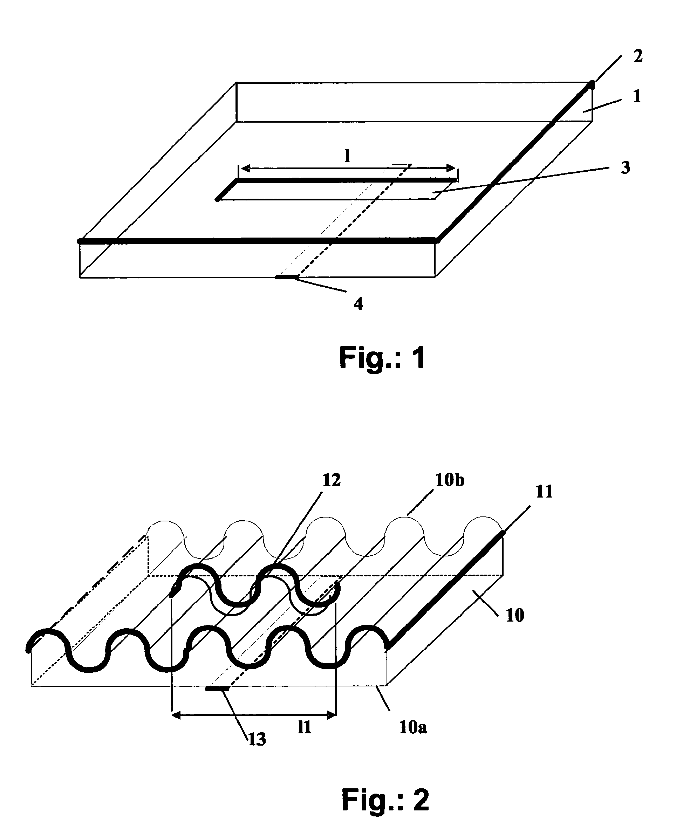

A description of a conventional linear resonating slot planar antenna will first be made with reference to figure 1.

As shown in figure 1, on a substrate 1 of a dielectric material covered by a ground plane 2 in a metal material, a linear slot 3 was etched. This slot has a length I which, in a known manner, is a function of the guided half-wavelength in the slot. More specifically, to operate at the resonant frequency of the fundamental mode, I = λs/2, where λs is the guided wavelength in the slot.

Secondly, as shown in figure 1, on the face of the substrate 1 opposite the face featuring the slot 3, a feed line 4 is realized. This feed line 4 in a conductive material is positioned such that the slot is in a short circuit plane of the feed line, i.e. a wavelength λg/4 of the feed line tip with λg the guided wavelength in the said feed line.

Hence, for a conventional planar antenna, the antenna dimensions at a given frequency are a function of the guided wavelength in the slot 3.

To reduce the total dimensions of the antenna, the present invention proposes to vary the thickness of the substrate supporting the slot type antenna. Thus, by modifying the vertical dimension of the substrate, it is possible to extend the length of the slot significantly and therefore to lower the resonant frequency or, which amounts to the same thing, for a given resonant frequency, reduce the substrate surface occupied by the printed antenna.

In figure 2, a first embodiment of an antenna in accordance with the present invention is shown diagrammatically. Hence, the substrate 10 in dielectric material has a planar surface 10a on which a feed line 13 is realised in a conductive material whereas its opposite face, namely the face with the ground plane 11 and in which the linear slot 12 is etched, presents a continuous sinusoidal shape profile 10b. In this case, instead of a slot 12 of length l corresponding to a dimension I on the substrate, a dimension on the substrate equal to l1, where l1 < l, is obtained for the same slot length. In this case, and as shown in figure 2, the feed line 13 is in a zone of constant substrate thickness and crosses the slot in a known manner in a short-circuit plane.

Indeed, it is preferable to position the feed line 13 in a zone of constant thickness, because the differences in thickness due to modifying the profile have an impact, mainly at the level of the normalized impedance of the resonating slot-line in the coupling zone with the feed line.

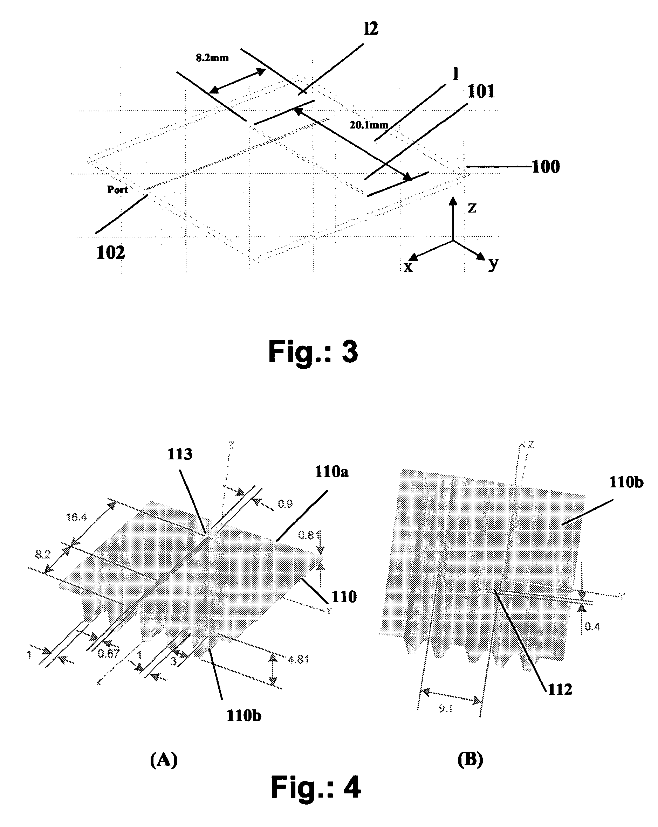

A practical embodiment of the present invention enabling the advantages of this invention to be highlighted will now be described with reference to figures 3, 4, 5 and 6.

Hence, in figure 3, a conventional resonant linear slot antenna of the type of the antenna of figure 1 is shown. This antenna is excited by electromagnetic coupling with a microstrip line 102 etched on the face of substrate 100 opposite the face receiving the slot 101. In the embodiment shown, the substrate in dielectric material has a permittivity of 3.38. The slot 101 etched on the substrate 100 has been dimensioned to operate at a central frequency of approximately 5.8 GHz. It has a length I equal to 20.1 mm and a width of 0.4 mm.

As shown in figure 3, the feed line 102 realised using microstrip technology crosses the slot 101 in such a manner that the end of the feed line 102, with respect to the slot, has a dimension 12 equal to 8.2 mm, which corresponds to λg/4, where λg is the guided wavelength in the feed line.

In the figures 4(A) and (B), a planar antenna is shown, comprising a linear resonating slot according to an embodiment of the present invention. This antenna was dimensioned to operate at the same frequency as the antenna of figure 3.

As shown clearly in figures 4(A) and 4(B), the antenna in accordance with the present invention, was realized on a substrate 110 of permittivity 3.38. The surface 110a of the substrate on which the feed line 113 was realized using microstrip technology is planar whereas the surface 110b on which slot 112 is etched is a surface with a variable thickness. In this case, the profile of the surface 110b is a discontinuous profile of the crenelate type, each crenelation having a noticeably trapezoid shape. Hence, as shown more specifically in figure 4(A), the base of the crenelation has a dimension of 3 mm whereas its summit has a dimension of 1 mm.

Secondly, as shown in figure 4(B), the length l1, corresponding to 20.1 mm of the length of the slot, is only 9.1 mm. One can therefore note a significant reduction in the overall dimensions of the slot type planar antenna in accordance with the present invention.

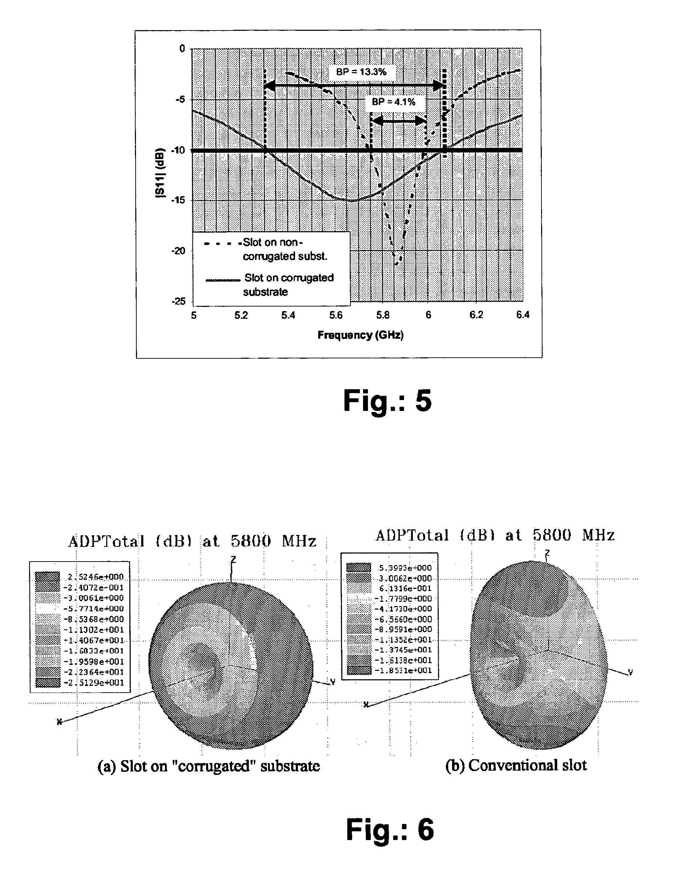

To highlight the advantages of this type of antenna, the comparative results of a simulation between the antenna of figure 3 and the antenna of figure 4 are given in figures 5 and 6.

Figure 5 shows the adaptation curve as a function of the frequency of the two antennas. The dotted curve relates to the antenna of figure 3 while the solid line curve relates to the antenna of figure 4. Comparing both curves shows that the two antennas radiate noticeably at the same frequency, namely 5.6 GHz for the antenna in accordance with the invention and 5.80 GHz for the reference antenna. The resonant frequency of the antenna in accordance with the invention is lower than approximately 200 MHz. On the other hand, a significant widening of the frequency bandwidth is observed, passing from 4.1% for the reference antenna to 13.3% for the antenna in accordance with the invention.

Finally, comparing the radiation patterns of the antenna according to the invention shown in figure 6(A) and the reference antenna shown in figure 6(B) shows that the antenna according to the invention benefits from a more omnidirectional radiation pattern. This comes from the fact that the oblique slot segments do not radiate perpendicularly to the substrate but laterally to the substrate.

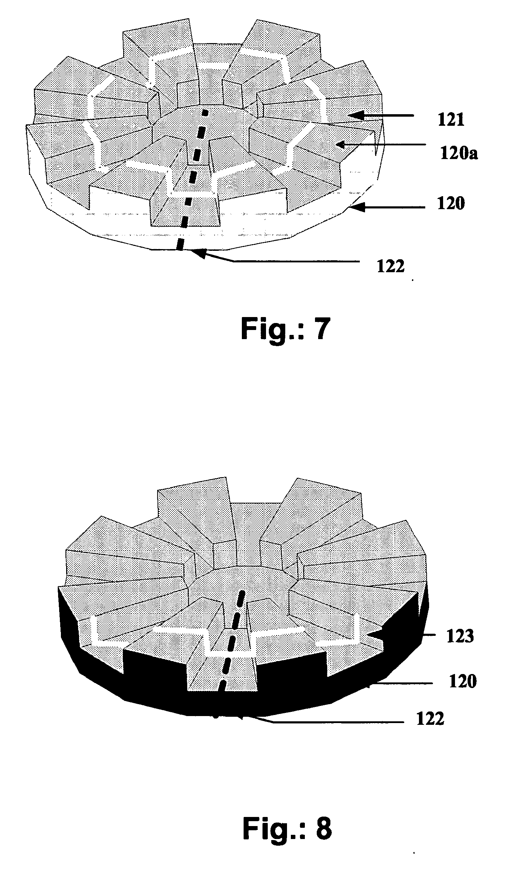

We will now describe with reference to figures 7 and 8, different variants of embodiments of the present invention. In both embodiments, the substrate 120 is noticeably cylindrical in form. The lower face of the substrate 20 is planar and features a feed line 122 realized using microstrip technology according to a radial direction. The upper face 120a on which the slot is etched presents a discontinuous profile, more particularly a crenelate profile. Figure 7 shows the case of an annular slot 121 while figure 8 shows the case of a resonant linear slot. In both cases, the size of the substrate is reduced for operation at a given frequency.

Generally, the materials used to realize this type of variable thickness substrate are, for example, materials of the foam type, plastic type or any other dielectric material enabling the realization of variable height substrates.

According to the volume of the parts required, the profile can be obtained by machining, moulding, stereolithography or any other method enabling the realization of variable height substrates.

## Claims

1. A planar antenna comprising a substrate (10, 110, 120) with a ground plane on a first face of the substrate, a slot (12, 112, 121) etched in said ground plane and a feed line (13, 113,122) realized on a second face of the substrate opposite said first face, said feed line crosses the slot for electromagnetic coupling, **characterized in that** said second face of the substrate is planar while said first face of the substrate has along the slot a variable profile (10b, 110b, 120a), such that the thickness of the substrate between said first and said second face is variable along the slot in alternating way.

2. The antenna according to claim 1, **characterized in that** the variable profile of the face of the substrate receiving the slot is a continuously variable profile such as a sinusoidal profile (10b).

3. The antenna according to claim 1, **characterized in that** the variable profile of the face of the substrate receiving the slot is a discontinuously variable profile such as a crenelate profile (110b, 120a).

4. The antenna according to any one of claims 1 to 3, **characterized in that** the variable profile of the face of the substrate receiving the slot is a periodic or aperiodic profile.

5. The antenna according to claim 1, **characterized in that** the variable profile of the face of the substrate receiving the slot is a radial symmetry profile (120a).

6. The antenna according to any one of claims 1 to 5, **characterized in that** the slot is a linear slot or an annular slot.

## Patentansprüche

1. Planarantenne, umfassend ein Substrat (10, 110, 120) mit einer Massefläche auf einer ersten Seite des Substrats, einen in die Massefläche geätzten Schlitz (12, 112, 121) und eine Zuführungsleitung (13, 113, 122), die auf einer der ersten Seite gegenüberliegenden zweiten Seite des Substrats realisiert ist, wobei die Zuführungsleitung den Schlitz zur elektromagnetischen Kopplung überquert, **dadurch gekennzeichnet, daß** die zweite Seite des Substrats planar ist, während die erste Seite des Substrats entlang dem Schlitz ein variables Profil (10b, 110b, 120a) aufweist, dergestalt, daß die Dicke des Substrats zwischen der ersten und der zweiten Seite entlang dem Schlitz auf alternierende Weise variabel ist.

2. Antenne nach Anspruch 1, **dadurch gekennzeichnet, daß** das variable Profil der Seite des Substrats, die den Schlitz aufnimmt, ein stetig variables Profil wie etwa ein sinusförmiges Profil (10b) ist.

3. Antenne nach Anspruch 1, **dadurch gekennzeichnet, daß** das variable Profil der Seite des Substrats, die den Schlitz aufnimmt, ein unstetiges variables Profil wie etwa ein Zinnenprofil (110b, 120a) ist.

4. Antenne nach einem der Ansprüche 1 bis 3, **dadurch gekennzeichnet, daß** das variable Profil der Seite des Substrats, die den Schlitz aufnimmt, ein periodisches oder aperiodisches Profil ist.

5. Antenne nach Anspruch 1, **dadurch gekennzeichnet, daß** das variable Profil der Seite des Substrats, die den Schlitz aufnimmt, ein Radialsymmetrieprofil (120a) ist.

6. Antenne nach einem der Ansprüche 1 bis 5, **dadurch gekennzeichnet, daß** der Schlitz ein linearer Schlitz oder ein ringförmiger Schlitz ist.

## Revendications

1. Antenne planaire comportant un substrat (10,110, 120) avec un plan de masse, sur une première face du substrat, une fente (12,112,121) gravée dans le plan de masse et une ligne d'alimentation (13, 113, 122) réalisée sur une seconde face du substrat opposée à la première face, ladite ligne d'alimentation croisant la fente en réalisant un couplage électromagnétique, **caractérisée en ce que** ladite seconde face du substrat est plane tandis que ladite première face du substrat présente le long de la fente, un profil variable (10b, 110b, 120a), telle que l'épaisseur du substrat entre lesdites première et seconde faces est variable lelong de la fente de manière alternée.

2. Antenne selon la revendication 1, **caractérisée en ce que** le profil variable de la face du substrat sur laquelle est réalisée la fente est un profil variable continu tel qu'un profil sinusoïdal (10b).

3. Antenne selon la revendication 1, **caractérisée en ce que** le profil variable de la face du substrat sur laquelle est réalisée la fente est un profil variable discontinu tel qu'un profil en créneaux (110b,120a).

4. Antenne selon l'une des revendications 1 à 3, **caractérisée en ce que** le profil variable de la face du substrat sur laquelle est réalisée la fente est un profil périodique ou apériodique.

5. Antenne selon la revendication 1, **caractérisée en ce que** le profil variable de la face du substrat sur laquelle est réalisée la fente est un profil à symétrie radiale (120a).

6. Antenne selon l'une des revendications 1 à 5, **caractérisée en ce que** la fente est une fente linéaire ou une fente annulaire.
